# EUROPÄISCHE PATENTSCHRIFT

(11) **EP 0 718 022 B1**
(45) Veröffentlichungstag und Bekanntmachung des Hinweises auf die Patenterteilung: **22.07.1998**
(21) Anmeldenummer: 95112734.9
(22) Anmeldetag: 12.08.1995
(51) Int. Cl.: B01D 29/44, B01D 46/24

(54) **Spaltfilter für Flüssigkeiten oder Gase**
Edge filter for liquids and gases
Filtre à arêtes pour liquides et gaz

(30) Priorität: 23.12.1994 DE 4446261
(43) Veröffentlichungstag der Anmeldung: 26.06.1996
(73) Patentinhaber: FILTERWERK MANN & HUMMEL GMBH, 71631 Ludwigsburg (DE)
(72) Erfinder: Bartelt, Bertram, D-71711 Steinheim (DE); Gohle, Peter, D-71636 Pflugfelden (DE); Schaal, Wolfgang, D-71522 Backnang (DE)
(74) Vertreter: Voth, Gerhard, Dipl.-Ing.

(56) Entgegenhaltungen:
- EP-A- 0 228 262
- EP-A- 0 581 153
- DE-U- 8 904 689
- GB-A- 1 367 535

## Beschreibung

Die Erfindung betrifft ein Spaltfilter für Flüssigkeiten oder Gase nach den Merkmalen des Oberbegriffs des Hauptanspruchs.

Ein solches Spaltfilter geht aus dem DE-U-89 04 689 hervor. Dieses besteht aus einem hohlzylindrischen Filterkörper, der aus einer Drahtwicklung besteht und von außen nach innen durchströmt ist. Am Umfang des Filterkörpers ist ein Schaber angeordnet mit welchem der Filterkörper gereinigt werden kann. Der von dem Filterkörper gelöste Schmutz gelangt über ein Auslaßventil zu einer Schmutzabfuhrleitung. Zusätzlich zu dem Schaber ist noch eine Drahtbürste vorgesehen, zum Entfernen des Schmutzes aus den Filterspalten.

Ein Nachteil dieses Aufbaus besteht darin, daß nur der oberflächlich anhaftende Schmutz an dem Filterkörper entfernt werden kann. Es hat sich im praktischen Betrieb gezeigt, daß Partikel die annähernd die Größe der Filterspaltbreite aufweisen, in dem Filterspalt hängenbleiben und mittels des Abstreifers oder Bürste nicht entfernt werden können.

Ein weiterer Nachteil ist darin zu sehen, daß bei einem Defekt des Filterkörpers die Flüssigkeit ungereinigt auf die Reinseite gelangt und dadurch die Filterwirkung gemindert wird. Es ist zwar bekannt, zusätzlich sogenannte Sicherheitsfilter oder Polizeifilter anzuordnen. Diese sind jedoch relativ aufwendig und benötigen zusätzlichen Bauraum.

Der Erfindung liegt deshalb die Aufgabe zugrunde, ein Spaltfilter für Flüssigkeiten oder Gase zu schaffen, das zuverlässig abgereinigt werden kann und außerdem die oben genannten Nachteile nicht aufweist.

Diese Aufgabe wird ausgehend von dem Oberbegriff des Hauptanspruchs durch dessen kennzeichnenden Merkmale gelöst.

Ein Vorteil der Erfindung ist darin zu sehen, daß das Sicherheitsfilter unmittelbar in das Filter integriert ist bzw. Elemente des Spaltfilters - nämlich das abstützende Element - als Sicherheitsfilter ausgebildet ist. Damit kann auf ein zusätzliches Sicherheitsfilter verzichtet werden.

Gemäß einer weiteren Ausgestaltung der Erfindung besteht das Sicherheitsfilter aus Stützstegen, auf welchen sich ein gewickelter Profildraht befindet. Dieser Profildraht ist nach der Art eines Drahtspaltfilters aufgebaut.

Eine weitere Ausgestaltung der Erfindung sieht vor, den Profildraht, welcher für das Sicherheitsfilter verwendet wird in Form eines Dreiecks auszubilden, wobei die Spitze des Dreiecks zu dem Filterkörper gerichtet ist. Damit wird eine Reduzierung der filterwirksamen Fläche vermieden. Der Filterkörper liegt unmittelbar auf den Spitzen des dreieckförmigen Profildrahtes auf.

Verfahrensmäßig erfolgt eine Abreinigung des Spaltfilters dadurch, daß der Druck auf der Seite des Reinflüssigkeitsraumes erhöht wird und damit eine Rückspülwirkung aufgrund des geringeren Druckes auf der Schmutzseite erzielbar ist. Die Rückspülung kann gepulst erfolgen. Aufgrund der Pulsation wird die Reinigungswirkung zusätzlich verbessert.

Gemäß einer weiteren Ausgestaltung des Rückspülverfahrens wird die Reinigungswirkung durch eine Vorreinigung mittels Ultraschall erhöht. Die Reinigung mittels Ultraschall kann auch parallel zu dem Rückspülvorgang erfolgen.

Eine Weiterbildung der Erfindung liegt in einem Verfahren zur Überwachung des Spaltfilters. Ziel des Verfahrens ist es, Defekte des Filterkörpers rechtzeitig zu erkennen und zu beheben. Die Erkennung erfolgt dadurch, daß zunächst der Zeitraum zwischen zwei Abreinigungszyklen ermittelt wird, dieser mit einem Vergleichswert verknüpft und anschließend ein Abweichungswert gebildet wird. Liegt die Abweichung außerhalb eines bestimmten Zeitrahmens, kann ein Signal zur Überprüfung des Spaltfilters erzeugt werden.

Eine weitere Ausgestaltung der Erfindung bezüglich der Abreinigung des Spaltfilters hat den Vorteil, daß durch das öffnen des Schmutzablaßventils eines Filters dieses automatisch rückgespült wird, d.h. durch die direkte Verbindung der Reinflüssigkeitsleitungen der Filter miteinander wird Reinflüssigkeit in das rückzuspülende Filter unter Betriebsdruck gefördert. Diese Reinflüssigkeit bewirkt einen Abtransport der angelagerten Schmutzpartikel an dem Filter über den Schmutzablauf.

Nach dem Rückspülen dieses Filters werden die Ventile umgeschaltet und ein weiteres Filter kann rückgespült werden. Normalerweise dauert das Rückspülen nur wenige Sekunden, so daß im wesentlichen sämtliche Filter im Einsatz sind und damit auch eine hohe Filtrierleistung erzielt wird. Die Ventile der Filter können mittels einer Steuerschaltung angesteuert werden. Eine solche Steuerschaltung kann beispielsweise mit elektrischen Steuerelementen aufgebaut sein oder in einer Gesamtsteuerung integriert sein. Zum Rückspülen eines der Filter bewirkt ein Steuersignal das Schalten der beiden für dieses Filter vorgesehenen Ventile. Die Reinigungszeit ist dabei frei einstellbar und richtet sich nach dem durchschnittlichen Schmutz- bzw. Feststoffanteil.

Es besteht Selbstverständlich auch die Möglichkeit, den Verschmutzungsgrad eines Filters über eine Differenzdruckmessung zwischen dem Druck auf der Rohflüssigkeitsseite und der Reinflüssigkeitsseite zu sensieren und in Abhängigkeit von diesem Differenzdruck die Ventile in die Rückspülstellung umzuschalten. In gleicher Weise kann auch die Dauer der Rückspülung über eine Differenzdruckmessung gesteuert werden, so daß ein vollautomatischer Betrieb der Filter unter gleichzeitiger Optimierung der Rückspülhäufigkeit und Rückspüldauer erzielt wird.

Gemäß einer weiteren Ausgestaltung der Erfindung wird vorgeschlagen, weitere Filter mit jeweils wenigstens einer Filterkammer vorzusehen. Auch diese Filter sind reinflüssigkeitsseitig mit dem ersten Filter verbunden und weisen in ihrem Rohflüssigkeitszulauf und ihrem Schmutzablauf ein Ventil auf. Es handelt sich damit bei diesen weiteren Filtern um die gleichen Komponenten, so daß mit einem einzigen Filterbaustein eine Filteranlage aufgebaut werden kann, die auf die Anforderungen, d.h. auf die anfallende Menge an die zu filternde Flüssigkeit optimal anpassbar ist. Selbst eine nachträgliche Erweiterung oder Reduzierung einer solchen Filteranlage ist ohne großen Aufwand möglich. Es ist lediglich ein weiterer Rohflüssigkeitszulauf und ein weiterer Reinflüssigkeitsablauf mit dem vorhandenen System zu koppeln bzw. zu entfernen.

Diese und weitere Merkmale von bevorzugten Weiterbildungen der Erfindung gehen außer aus den Ansprüchen auch aus der Beschreibung und den Zeichnungen hervor. Ausführungsbeispiele der Erfindung sind in den Zeichnungen dargestellt und werden im folgenden näher erläutert. Die Zeichnungen zeigen:
- Figur 1: Ein Filterkörper in einer Teilschnittdarstellung,
- Figur 2: die Prinzipskizze einer Filtereinrichtung mit mehreren Filtern.

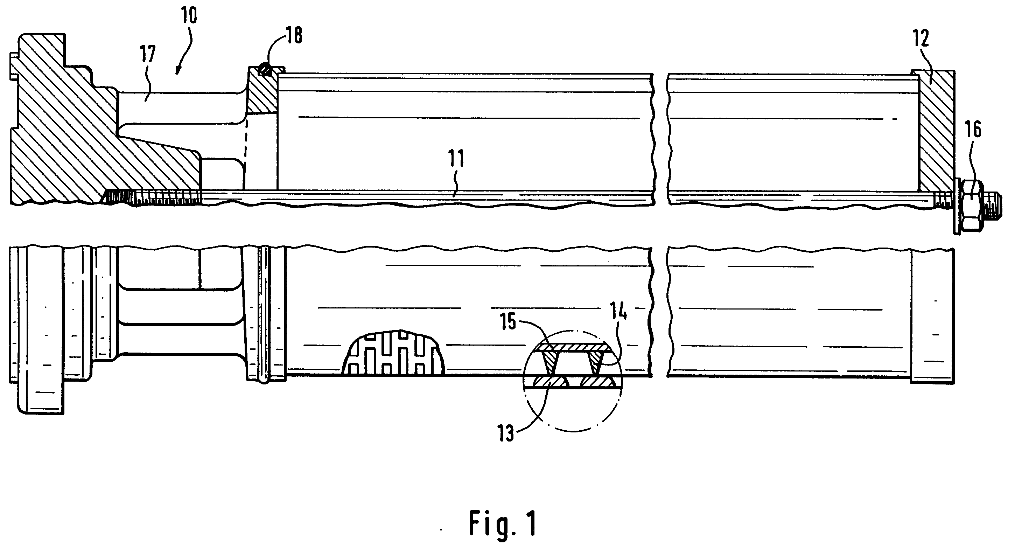

Ein Filterkörper wie in Figur 1 gezeigt wird beispielsweise bei einem Spaltfilter, wie er aus dem DE-U-92 09 856.8 bekannt ist, angewendet. Dieser Filterkörper besteht aus einem Tragkörper 10. An diesem Tragkörper 10 ist über eine Mittelstange 11 eine Bodenplatte 12 befestigt. Die Mittelstange 11 besitzt an ihrem äußeren Ende ein Gewinde, auf welchem eine Mutter 16 aufgeschraubt ist. Zwischen Tragkörper 10 und Bodenplatte 12 ist eine Filterplatte 13 eingespannt. Diese Filterplatte liegt auf einem Sicherheitsfilter 14 auf, welches aus dreieckförmigen Profildrähten besteht. Wie ersichtlich, weisen die Spitzen des Dreieckprofils nach außen, so daß die durch die Filterplatte 13 gebildete wirksame Filterfläche nicht verringert wird. Das Sicherheitsfilter 14 ist mit Stützstegen 15 die längs der Mittelachse des Filterelements verlaufen, verbunden. Die zu reinigende Flüssigkeit strömt die Filterplatte von außen an. Der Schmutz lagert sich an der Filterplatte außen ab. Die Reinflüssigkeit verläßt über den Reinflüssigkeitsauslaß 17 das Filterelement. Zur Trennung zwischen Rohflüssigkeitsbereich und Reinflüssigkeitsauslaß 17 ist ein Dichtring 18 vorgesehen.

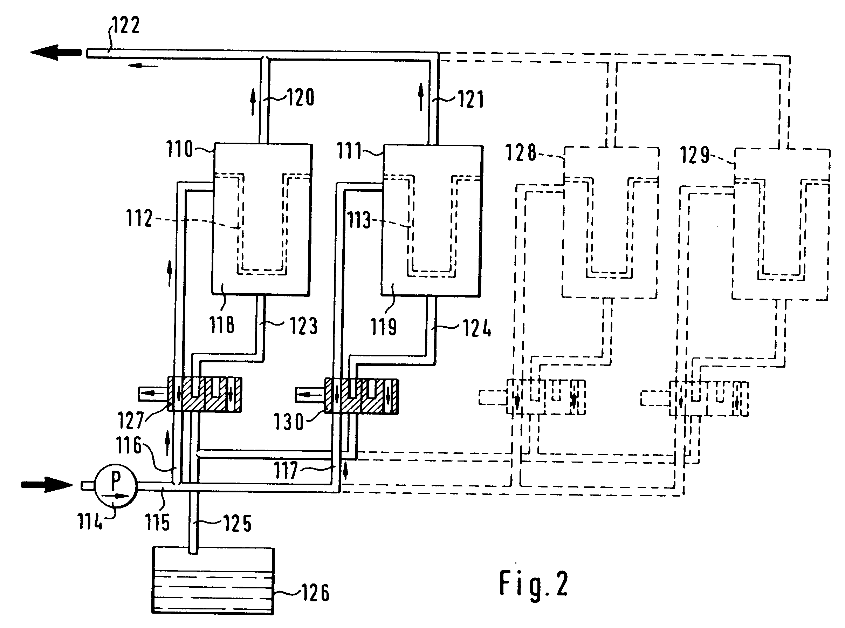

Die in Figur 2 gezeigte Filteranlage dient beispielsweise zur Reinigung von Flüssigkeiten und besteht im wesentlichen aus Filtereinrichtungen 110, 111 die mit Filterkörpereinsätzen 112, 113 bestückt sind.

Über eine Pumpe 114 wird Rohflüssigkeit von einer hier nicht dargestellten Maschine über die Leitungen 115, 116, 117 in den Rohflüssigkeitsraum 118, 119 der Filtereinrichtungen 110, 111 gefördert. Der Schmutz, d.h. in diesem Fall die mitgeschwemmten Teilchen, lagern sich an den äußeren Flächen der Filterkörper 112, 113 an. Die gereinigte Flüssigkeit verläßt über die Leitungen 120, 121 die Filtereinrichtungen.

Diese Leitungen münden in eine gemeinsame Leitung 122, über welche die gereinigte Flüssigkeit die Anlage verläßt. Am Boden der Filtereinrichtungen 110, 111 befindet sich jeweil ein Schmutzablaß. Der in der Filtereinrichtung sich ansammelnde Schmutz kann über die Leitungen 123, 124 einer gemeinsamen Schmutzsammelleitung 125 zugeführt werden, welche in ein Sammelbecken 126 mündet. Die Zuführleitungen für die Rohflüssigkeit 116, 117, sowie die Leitungen für den Schmutzaustrag sind mit Ventilen 127, 130 verbunden.

In der in Figur 2 dargestellten Ventilstellung sind die Leitungen 116, 117 für die Rohflüssigkeitszufuhr durchgeschaltet. Die Leitungen 123, 124 für den Schmutzablauf sind unterbrochen. Wird von der Pumpe 114 Rohflüssigkeit gefördert, so wird diese in beiden Filtereinrichtungen 110, 111 gefiltert und verläßt die Filtereinrichtungen über die Leitungen 120, 121.

In der Figur 2 sind zwei weitere Filtereinrichtungen 128, 129 in gestrichelter Form dargestellt. Diese können das gesamte Filtersystem erweiteren, wobei sich diese Erweiterung nicht auf eine oder zwei Filtereinrichtungen beschränkt, sondern je nach Anwendungsfall eine beliebige Anzahl von Einrichtungen das System ergänzen können. Diese Filtereinrichtungen 128, 129 sind in dem Aufbau mit den Filtereinrichtungen 110 oder 111 identisch. Es handelt sich hier also um einzelne Filtermodule, die aneinander gekoppelt werden können, um die Filterkapazität zu erhöhen.

## Patentansprüche

1. Spaltfilter für Flüssigkeiten oder Gase mit einem durchströmten Filterkörper der innerhalb eines Filtergehäuses einen Reinraum umschließt und von einem Schmutzraum abtrennt mit einem den Filterkörper auf der Seite des Reinraums abstützenden Element wobei der Filterkörper aus einer Platte (13) besteht, welche schlitzförmige Öffnungen aufweist, dadurch gekennzeichnet, daß das abstützende Element ein Sicherheitsfilter (14) ist.

2. Spaltfilter nach Anspruch 1, dadurch gekennzeichnet, daß das Sicherheitsfilter (14) aus Stützstegen (15) besteht auf welchen sich ein Spaltfilter bildender gewickelter Profildraht befindet.

3. Spaltfilter nach Anspruch 2, dadurch gekennzeichnet, daß der Profildraht eine Dreiecksform aufweist wobei die Spitze des Dreiecks zu dem Filterkörper (13) gerichtet ist.

4. Spaltfilter nach einem der vorherigen Ansprüche, dadurch gekennzeichnet, daß der Filterkörper (13) auf den Spitzen des dreieckförmigen Profildrahtes aufliegt.

5. Verfahren zum Reinigen eines Spaltfilters nach einem der vorherigen Ansprüche, dadurch gekennzeichnet, daß das Spaltfilter derart rückgespült wird, daß der Druck auf der Seite des Reinraums höher als der Druck auf der Schmutzseite ist.

6. Verfahren nach Anspruch 5, dadurch gekennzeichnet, daß die Rückspülung gepulst erfolgt.

7. Verfahren nach Anspruch 5, dadurch gekennzeichnet, daß zur Erhöhung der Reinigungswirkung eine Vorreinigung und/oder eine Reinigung beim Rückspülvorgang mittels Ultraschall erfolgt.

8. Verfahren zur Überwachung eines Spaltfilters nach einem der vorherigen Ansprüche 1-4, dadurch gekennzeichnet, daß der Zeitraum zwischen zwei Abreinigungszyklen ermittelt und mit einem Vergleichswert verglichen wird, wobei Abweichungen außerhalb eines bestimmten Zeitrahmens ein Signal erzeugen.

9. Filteranlage, insbesondere für Flüssigkeiten mit wenigstens zwei Filtereinrichtungen, die mit jeweils wenigstens einem Spaltfilter nach Anspruch 1 bestückt sind, wobei die eine Filtereinrichtung (110) einen Rohflüssigkeitszulauf (116) und einen Reinflüssigkeitsablauf (120) und ferner einen Schmutzablaß (123) aufweist und wobei eine Pumpe (114) im Rohflüssigkeitszulauf angeordnet ist und wenigstens ein Ventil (127) in dem Rohflüssigkeitszulauf und ein weiteres Ventil in dem Schmutzablauf angeordnet ist, die weitere Filtereinrichtung (111) ebenfalls einen Rohflüssigkeitszulauf (117) und einen Reinflüssigkeitsablauf (128) sowie einen Schmutzablaß (124) aufweist sowie ein Ventil (130) in dem Rohflüssigkeitszulauf und ein weiteres Ventil (130) in dem Schmutzablauf angeordnet ist, wobei die Eingangsseiten der Ventile (127, 130) für den Rohflüssigkeitszulauf (116, 117) miteinander verbunden und an die Pumpe (114) angeschlossen sind und wobei der Reinflüssigkeitsablauf (121) der weiteren Filtereinrichtung direkt mit dem Reinflüssigkeitsablauf (120) der ersten Filtereinrichtung (110) verbunden ist.

10. Filteranlage nach Anspruch 9, dadurch gekennzeichnet, daß eine Steuerschaltung zum Rückspülen der Filtereinrichtung (111) vorgesehen ist, wobei die Steuerschaltung ein Schaltelement aufweist, welches zum Rückspülen einer Filtereinrichtung (111) das Ventil (130) in dem Rohflüssigkeitszulauf dieser Filtereinrichtung (111) verschließt und das Ventil (130) in dem Schmutzablaßzweig dieser Filtereinrichtung (111) öffnet, so daß ein Teil der Reinflüssigkeit über die zu spülende Filtereinrichtung geführt wird, dort den Schmutz aufnimmt und einem Schmutzaustrag (126) zuführt.

11. Filteranlage nach einem der vorherigen Ansprüche 9-10, dadurch gekennzeichnet, daß weitere rückspülbare Filtereinrichtungen mit jeweils wenigstens einem Spaltfilter gemäß Anspruch 1 vorgesehen sind, wobei diese Filtereinrichtungen ebenfalls in ihrem Rohflüssigkeitszulauf und in ihrem Schmutzablaß ein Ventil aufweisen und der Reinflüssigkeitsablauf dieser Einrichtungen mit den Reinflüssigkeitsabläufen der ersten und zweiten Einrichtung verbunden sind und wobei das Rückspülen einer oder mehrerer Filtereinrichtungen gleichzeitig durch die entsprechende Ansteuerung der Ventile erfolgt.

12. Filteranlage nach einem der vorherigen Ansprüche 9-11, dadurch gekennzeichnet, daß die Rückspülmenge über ein steuerbares Stellorgan einstellbar ist.

13. Filteranlage nach Anspruch 12, dadurch gekennzeichnet, daß das steuerbare Stellorgan ein Kugelhahn, Klappe, Membran ist, welches in der Rückspülleitung angeordnet ist.

14. Filteranlage nach Anspruch 13, dadurch gekennzeichnet, daß das Tastverhältnis zwischen geöffnetem und geschlossenem Ventil einstellbar ist.

## Claims

1. Gap-type filter for liquids or gases, including a traversable filter body, which surrounds a filtrate chamber internally of a filter housing and separates such chamber from a contaminants chamber, and including a member which supports the filter body on the side of the filtrate chamber, the filter body comprising a plate (13) which has slot-like apertures therein, characterised in that the supporting member is a safety filter (14).

2. Gap-type filter according to claim 1, characterised in that the safety filter (14) includes supporting ribs (15), on which there is situated a profile wire which is wound and forms the gap-type filter.

3. Gap-type filter according to claim 2, characterised in that the profile wire has a triangular configuration, the apex of the triangle being orientated towards the filter body (13).

4. Gap-type filter according to one of the preceding claims, characterised in that the filter body (13) lies on the apexes of the triangular profile wire.

5. Method of cleaning a gap-type filter according to one of the preceding claims, characterised in that the gap-type filter is back-flushed in such a manner that the pressure on the side of the filtrate chamber is higher than the pressure on the contaminants size.

6. Method according to claim 5, characterised in that the back-flushing is effected in a pulsed manner.

7. Method according to claim 5, characterised in that a preliminary cleaning process and/or a cleaning process during the back-flushing operation are/is effected by means of ultrasonics to increase the cleaning action.

8. Method of monitoring a gap-type filter according to one of the preceding claims 1-4, characterised in that the period of time between two cleaning cycles is determined and compared with a comparison value, deviations outside a predetermined time structure generating a signal.

9. Filter system, more especially for liquids, including at least two filter arrangements which are each provided with at least one gap-type filter according to claim 1, one filter arrangement (110) having an unfiltered liquid inlet (116) and a filtered liquid outlet (120) and also a contaminants outlet (123), and a pump (114) being disposed in the unfiltered liquid inlet, and at least one valve (127) being disposed in the unfiltered liquid inlet and an additional valve being disposed in the contaminants outlet, the additional filter arrangement (111) also having an unfiltered liquid inlet (117) and a filtered liquid outlet (128) as well as a contaminants outlet (124), and a valve (130) being disposed in the unfiltered liquid inlet and an additional valve (130) being disposed in the contaminants outlet, the input sides of the valves (127, 130) for the unfiltered liquid inlet (116, 117) being interconnected and communicating with the pump (114), and the filtered liquid outlet (121) of the filter arrangement being directly connected to the filtered liquid outlet (120) of the first filer arrangement (110).

10. Filter system according to claim 9, characterised in that a control circuit is provided for the back-flushing of the filter arrangement (111), the control circuit having a switching member which, for the back-flushing of a filter arrangement (111), closes the valve (130) in the unfiltered liquid inlet of this filter arrangement (111) and opens the valve (130) in the contaminants outlet branch of this filter arrangement (111), so that a portion of the filtered liquid is conducted over the filter arrangement to be flushed, absorbs the contaminants there and feeds them to a contaminants discharging means (126).

11. Filter system according to one of the preceding claims 9-10, characterised in that additional back-flushable filter arrangements are each provided with at least one gap-type filter according to claim 1, these filter arrangements also having a valve in their unfiltered liquid inlet and in their contaminants outlet, and the filtered liquid outlet of these arrangements being connected to the filtered liquid outlets of the first and second arrangements, and the back-flushing of one or more filter arrangements being simultaneously effected by the appropriate actuation of the valves.

12. Filter system according to one of the preceding claims 9-11, characterised in that the back-flushing quantity is adjustable via a controllable adjusting member.

13. Filter system according to claim 12, characterised in that the controllable adjusting member is a ball valve, flap or diaphragm, which is disposed in the back-flushing conduit.

14. Filter system according to claim 13, characterised in that the pulse sequence ratio between the open and closed valve is adjustable.

## Revendications

1. Filtre à arêtes pour liquides ou gaz dans lequel :
- un corps filtrant est traversé par le fluide et entoure à l'intérieur d'un boîtier de filtre une chambre propre et la sépare d'une chambre collectant les saletés,
- un élément soutient le corps filtrant du côté de la chambre propre,
- le corps filtrant est constitué d'une plaque (13) percée d'ouvertures en forme de fentes,
caractérisé en ce que
l'élément de soutien est un filtre de sécurité (14).

2. Filtre selon la revendication 1,
caractérisé en ce que
le filtre de sécurité (14) est constitué de barrettes de soutien (15) sur lesquelles est enroulé un fil profilé formant un filtre à arêtes.

3. Filtre selon la revendication 2,
caractérisé en ce que
le fil profilé a la forme d'un triangle dont la pointe est dirigée vers le corps filtrant (13).

4. Filtre selon une des revendications précédentes,
caractérisé en ce que
le corps filtrant (13) repose sur les pointes du fil à profil triangulaire.

5. Procédé pour nettoyer un filtre à arêtes selon une des revendications précédentes,
caractérisé en ce que
le filtre à arêtes est rincé en sens inverse, de sorte que la pression du côté de la chambre propre est plus élevée que la pression du côté saleté.

6. Procédé selon la revendication 5,
caractérisé en ce que
le rinçage inversé s'effectue de manière pulsée.

7. Procédé selon la revendication 5,
caractérisé en ce que
pour accroître l'efficacité du nettoyage, on procède à un prénettoyage et/ou à un nettoyage, pendant l'opération de rinçage en sens inverse, par des ultrasons.

8. Procédé pour surveiller un filtre à arêtes selon une des revendications 1 à 4,
caractérisé en ce que
l'intervalle entre deux cycles de nettoyage est mesuré et comparé à une valeur de référence, les écarts au-delà d'une plage donnée entraînant la production d'un signal.

9. Installation de filtration, en particulier de liquides, comprenant au moins deux dispositifs de filtration équipés chacun d'au moins un filtre à arêtes selon la revendication 1, dans laquelle :
- un dispositif de filtration (110) comprend une amenée (116) de liquide brut, une sortie (120) de liquide purifié ainsi qu'une évacuation des saletés (123),
- il est prévu, dans l'amenée (116) une pompe et au moins une soupape (127) dans l'évacuation des saletés une autre soupape,
- l'autre dispositif de filtration (111) comprend également une amenée (117) de liquide brut, une sortie (121) de liquide épuré, une évacuation de saleté (124), une soupape (130) sur l'amenée (117) et une autre soupape (130) sur l'évacuation des saletés,
- les côtés entrée des soupapes (127, 130) situées sur les amenées de liquide brut (116, 117) sont reliés entre eux, tandis que la sortie (121) du liquide purifié du deuxième dispositif de filtration est relié directement à la sortie (120) de liquide épuré du premier dispositif de filtration (110).

10. Installation de filtration selon la revendication 9,
caractérisée en ce qu'
il est prévu un circuit de commande pour rincer en sens inverse le dispositif de filtration (111), ce circuit comportant un élément de commutation qui, pour rincer en sens inverse un dispositif de filtration (111) ferme la soupape (130) montée sur la sortie de liquide épuré de ce dispositif (111) et ouvre la soupape (130) montée sur la branche d'évacuation des saletés de ce dispositif de filtration (111), de sorte qu'une partie du liquide épuré est amenée au dispositif de filtration à rincer, y prend les saletés et est amenée à une évacuation de saletés (126).

11. Installation de filtration selon la revendication 9 ou 10,
caractérisée en ce qu'
elle comporte d'autres installations de filtration rinçables en sens inverse et équipées chacune d'au moins un filtre à arêtes selon la revendication 1, ces installations ayant également chacune une soupape montée sur l'amenée de liquide brut et sur l'évacuation des saletés, tandis que la sortie du liquide épuré de ces installations est reliée aux sorties de liquide épuré du premier et du second dispositif, le rinçage en sens inverse d'un ou plusieurs dispositifs de filtration étant assuré en même temps par commande correspondante des soupapes.

12. Installation de filtration selon une des revendications 9 à 11,
caractérisée en ce que
le débit de rinçage en sens inverse est réglable par un organe commandé.

13. Installation de filtration selon la revendication 12,
caractérisée en ce que
l'organe de réglage commandé est un robinet à boisseau sphérique, un clapet, une membrane, monté dans la conduite assurant le rinçage en sens inverse.

14. Installation de filtration selon la revendication 13,
caractérisée en ce que
le rapport entre la durée d'ouverture et la durée de fermeture de la soupape est réglable.
